# EUROPÄISCHE PATENTSCHRIFT

(11) **EP 3 988 261 B1**
(45) Veröffentlichungstag und Bekanntmachung des Hinweises auf die Patenterteilung: **01.02.2023**
(21) Anmeldenummer: 20203784.2
(22) Anmeldetag: 26.10.2020
(51) Int. Cl.: B25J 17/00, B25J 19/00, F28D 15/02

(54) **GELENK FÜR EINEN ROBOTER**
GRIPPER FOR A ROBOT
ARTICULATION POUR UN ROBOT

(43) Veröffentlichungstag der Anmeldung: 27.04.2022
(73) Patentinhaber: Siemens Aktiengesellschaft, 80333 München (DE)
(72) Erfinder: Potoradi, Detlef, 97616 Bad Neustadt/Saale (Mühlbach) (DE)

(56) Entgegenhaltungen:
- CN-A- 109 227 599
- CN-U- 207 465 256
- JP-A- H0 655 482
- JP-A- S60 108 292
- JP-A- 2004 222 428
- JP-A- 2010 221 310

## Beschreibung

Die Erfindung betrifft ein Gelenk für einen Roboter.

Das Dokument JP H06 55482 A zeigt: Im Raum drehbares Gelenk mit einem Gehäuse, einem an dem Gehäuse angebrachten Ausleger, einem Motor zum Antrieb des Auslegers und einem an dem Motor angebrachten Untersetzungsgetriebe zur Verringerung der Drehgeschwindigkeit des Motors, wobei ein wärmeleitendes Medium an dem Motor angebracht ist und ein wärmeableitendes Element an einem dem Raum ausgesetzten Teil des Gelenks vorgesehen ist. Ein Wärmestrahlungselement ist auf einem Teil der Verbindung, der dem Raum ausgesetzt ist, vorgesehen, das Wärmestrahlungselement und das Wärmeleitmedium sind gekoppelt, das Wärmestrahlungselement ist an der Verbindung mit einem Element mit einer niedrigen Wärmeleitfähigkeit befestigt, und ein Wärmeisolator ist auf einer Oberfläche vorgesehen, die von dem Wärmestrahlungselement zu der Verbindung strahlt.

JP S60 108292 A zeigt ein wärmeableitendes Gelenk eines Industrieroboters, umfassend: einen Motor zum Antreiben eines Gelenks; ein Wärmerohr zum Ableiten der vom Motor erzeugten Wärme; und ein wärmeableitendes Element zum Ableiten/Ableiten der Wärme.

JP 2004 222428 A erkennt ein Problem im Bereitstellen eines in ein Leistungsmodul integrierten Aktuators, bei dem die Verkürzung des Aktuators in axialer Richtung, die Vereinfachung der Verdrahtung und die Vermeidung von Fehlverdrahtungen gleichzeitig erreicht werden können, während eine Verbesserung der Wärmeableitungsleistung eines Leistungsschaltelements, das auf einem Leistungsmodulteil und einem Aktuator angeordnet ist, realisiert wird. Die Lösung gelingt, wie folgt: In dem integrierten Leistungsmodul ist ein Leistungsmodul, in dem ein Leistungsschaltelement oder dergleichen in einem zylindrischen Gehäuse enthalten ist, am Umfang eines Gehäuses angeordnet. Es sind mehrere wärmeableitende Rippen angeordnet, die zwischen dem Gehäuse und dem Leistungsmodul so ausgebildet sind, dass sie sich in eine axiale Richtung erstrecken, durch Kleben mit dem Gehäuse verbunden sind und so angebracht sind, dass sie in Kontakt mit dem Leistungsmodul stehen. Die Kühlkanäle sind mit einem Teil zwischen dem Gehäuse und dem Leistungsmodul so umgeben, dass das Kühlmedium teilweise zwischen den mehreren Wärmeableitungsrippen hin-10 durchgeht.

Die Dokumente CN 207 465 256 U, CN 109 227 599 A und JP 2010 221310 A offenbaren Robotergelenke mit Wärmerohren zum Abführen von Wärme.

Die Patentschrift EP 1 829 651 B1 offenbart eine Gelenkstruktur eines Roboters zum Betätigen einer mit einem Roboterglied verbundenen Anordnung, wobei die Gelenkstruktur umfasst:
einen ersten Motor zum Bewirken, dass die Anordnung in Bezug auf das Roboterglied eine Längs-Schwenkbewegung ausführt;
einen zweiten Motor zum Bewirken, dass die Anordnung in Bezug auf das Roboterglied eine seitliche Schwenkbewegung ausführt;
und eine Basis, dadurch gekennzeichnet, dass der erste Motor und der zweite Motor an der Basis angeordnet sind, sodass die Ausgangswelle des ersten Motors und die Ausgangswelle des zweiten Motors parallel zueinander und orthogonal zu dem Roboterglied sind.

Insbesondere Leichtbauroboter weisen in ihren Robotergelenken oftmals derartige Gelenkstrukturen auf, sogenannte "Joints".

Durch eine Integration der einzelnen Komponenten in den Joint und des Joints in das Robotergelenk besteht das Problem, dass die in den Komponenten des Joints entstehende Wärme nur schwer abgeführt werden kann. Für alle Komponenten des Joints ergibt sich dadurch ein thermisches Problem.

Der Erfindung liegt die Aufgabe zugrunde, ein Robotergelenk dahingehend zu verbessern.

Die Lösung der Aufgabe gelingt durch Anspruch 1, d. h. ein Gelenk für einen Roboter, insbesondere kollaborativen Roboter, aufweisend eine Mehrzahl an Komponenten, wenigstens:
- einen Antrieb zur Bewegung des Gelenks,
- einen Geber zur Bereitstellung einer Drehzahl-, Kommutierungs- und/oder Lageinformation,
- ein Wärmerohr zur Abführung von Wärme aus dem Gelenk, wobei das Gelenk eine Mehrzahl an Wärmerohren aufweist, wobei ein erstes Wärmerohr eine erste Teilmenge der Komponenten tangiert, wobei ein zweites Wärmerohr eine zweite Teilmenge der Komponenten tangiert, wobei die erste Teilmenge und die zweite Teilmenge unterschiedliche Teilmengen sind.

Diese Anordnung der Wärmerohre ist davon abhängig, welche Komponenten im Joint thermisch kritisch sind und welche Teile im Joint stehen oder sich drehen. Die Anordnung der Wärmerohre sollte vorteilhaft flexibel an die Konstruktion des Joints angepasst werden.

Ein Wärmerohr ist ein Wärmeübertrager, der unter Nutzung von Verdampfungswärme eines Mediums eine hohe Wärmestromdichte erlaubt. Das Wärmerohr eignet sich aufgrund einer vorteilhaft schlanken Bauweise besonders gut für das Gelenk, da große Wärmemengen auf einer kleinen Querschnittsfläche transportiert werden können.

Das Wärmerohr kann als Heatpipe oder als Zwei-Phasen-Thermosiphon ausgebildet sein. Auch andere Ausführungen des Wärmerohrs sind möglich.

Ein grundlegendes Funktionsprinzip ist bei beiden Bauformen des Wärmerohrs im Wesentlichen gleich. Ein Unterschied liegt insbesondere im Rücktransport eines vorzugsweise gasförmigen Arbeitsmediums zu einem Verdampfer, d. h. zu einer Stelle, an der Wärme zugeführt wird. Der Rücktransport erfolgt bei beiden Bauformen passiv und damit ohne Hilfsmittel wie etwa einer Umwälzpumpe.

Beim Thermosiphon wird die Schwerkraft (Gravitation) ausgenutzt, bei der Heatpipe besorgen Kapillarkräfte den Rücktransport des Arbeitsmediums.

Wärmerohre sind vorteilhaft als Metall aufweisende Gefäße mit einer länglichen Form ausgebildet, welche ein hermetisch gekapseltes Volumen enthalten. Das Wärmerohr ist vorteilhaft mit einem Arbeitsmedium, z. B. Wasser oder Ammoniak, gefüllt. Das Arbeitsmedium füllt das Volumen zu einem kleinen Teil in flüssigem, zum größeren Teil im gasförmigen Zustand aus.

Eine Stelle des Gefäßes, welche einer Energieaufnahme, insbesondere Wärmeaufnahme, dient, heißt Verdampfer. Eine Stelle des Gefäßes, welche einer Energieabgabe, insbesondere Wärmeabgabe, dient, heißt Kondensator. Der Verdampfer kann sich an einem Ende oder in der Mitte befinden.

In einer vorteilhaften Ausführungsform weist der Antrieb eine dynamoelektrische Maschine und einen Umrichter auf.

Die dynamoelektrische Maschine ist vorzugsweise eine dynamoelektrische rotatorische Maschine, insbesondere ein Motor.

Die Maschine ist vorteilhaft ein Servomotor.

Jedoch sind auch Linearmotoren möglich.

In einer vorteilhaften Ausführungsform weist das Gelenk als weitere Komponente ein Getriebe auf.

Dies ist vorteilhaft, da auf diese Weise erforderliche, hohe Drehmomente aus kleinem Bauvolumen erzeugt werden können.

Es ist ferner denkbar, dass ein Direktantrieb im Gelenk vorhanden ist.

In einer vorteilhaften Ausführungsform weist das Gelenk als weitere Komponente eine Bremse auf.

Dies ist vorteilhaft, da dadurch ein präziser Bewegungsablauf möglich ist. Zudem wird so bei Stromausfall der Roboter stabilisiert.

Ferner kann eine Bremswirkung auch durch ein selbsthemmendes Getriebe erreicht werden.

In einer vorteilhaften Ausführungsform weist das Gelenk wenigstens einen externen Kühlkörper auf.

Vorteilhaft weist das Gelenk eine Mehrzahl an externen Kühlkörpern auf. Diese sind beispielsweise an einem vorderen axialen Ende des Gelenks und an einem hinteren axialen Ende des Gelenks angeordnet. Es sind jedoch auch andersartige Anordnungen möglich.

Der externe Kühlkörper weist vorteilhaft eine vergrößerte Oberfläche, z. B. mittels einer Rippenstruktur, auf.

In einer vorteilhaften Ausführungsform ist das Wärmerohr zur Abgabe der Wärme an einen externen Kühlkörper ausgebildet. Hierzu ist das Wärmerohr vorteilhaft an den externen Kühlkörper angebunden.

Das Wärmerohr und der externe Kühlkörper sind vorteilhaft derart verbunden, dass ein guter Wärmeübergang stattfindet. In einer vorteilhaften Ausführungsform ist das Wärmerohr als Heatpipe ausgebildet.

Dies ist vorteilhaft, da dadurch Wärme effizient abgeführt werden kann. Ferner benötigt die Heatpipe nur wenig Bauraum.

Zudem ist die Heatpipe von Vorteil, da sich das Gelenk eines Roboters bewegt und sich damit eine Position des Wärmerohrs ändert. Ein Wärmetransport bei der Heatpipe funktioniert immer, da ein Kapillareffekt genutzt wird, unabhängig von einer Ausrichtung.

In einer vorteilhaften Ausführungsform sind die Komponenten axial aneinandergereiht angeordnet.

Dies bietet den Vorteil, dass nur wenig Bauraum benötigt wird. Ferner kann so das Wärmerohr optimal angeordnet werden.

In einer vorteilhaften Ausführungsform weist das Gelenk zwei externe Kühlkörper auf, wobei ein erster externer Kühlkörper an einem vorderen axialen Ende des Gelenks angeordnet ist, wobei ein zweiter externer Kühlkörper an einem hinteren axialen Ende angeordnet ist.

Die Lösung der oben gestellten Aufgabe gelingt ferner durch einen Roboter, insbesondere einen kollaborativen Roboter, aufweisend ein derartiges Gelenk.

Der Roboter weist das beschrieben Gelenk bzw. den Joint auf. Die darin enthaltenen Komponenten werden, vorzugsweise über Heatpipes und externe Kühlkörper, entwärmt.

Die Wärmerohre, insbesondere Heatpipes, leiten die Wärme mit hoher Leitfähigkeit aus dem Joint hinaus und geben vorteilhaft die Wärme an die extern angebrachten Kühlkörper ab. Dabei sind verschiedene Variationen bezüglich einer Anzahl der Wärmerohre, einer Anordnung der Wärmerohre sowie einer Gestaltung und Anordnung der Kühlkörper möglich.

Da sich der Roboter bewegt, ist die Wärmeabfuhr durch die beschriebenen Kühlkörper ausreichend.

Im Folgenden wird die Erfindung anhand der in den Figuren dargestellten Ausführungsbeispiele näher beschrieben und erläutert. Es zeigen:
- FIG 1: einen Roboter, insbesondere einen kollaborativen Roboter,
- FIG 2: einen Joint,
- FIG 3: einen Joint, aufweisend wenigstens ein Wärmerohr, der nicht Teil der Erfindung ist,
- FIG 4: eine Ausführung des Joints.

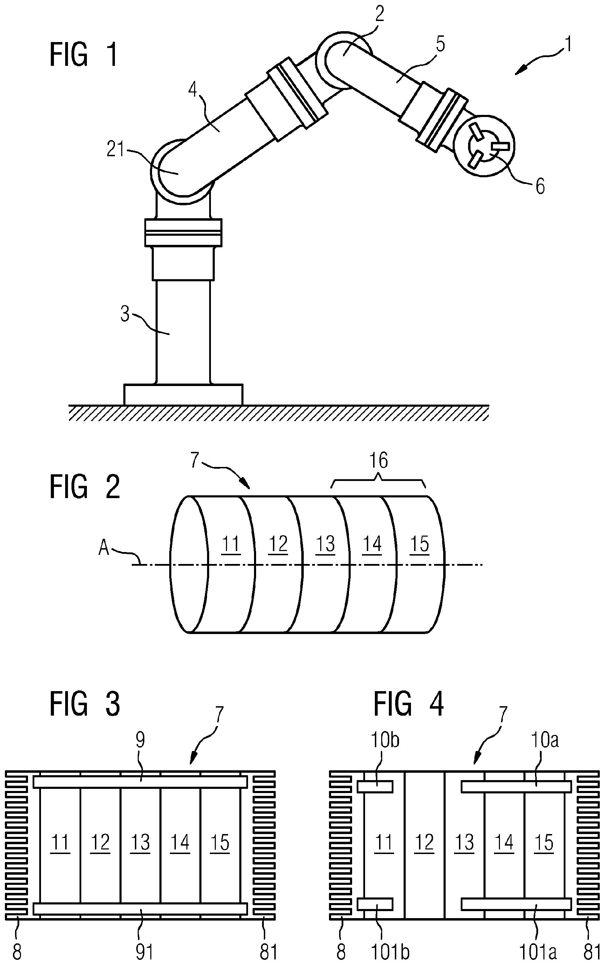

FIG 1 zeigt einen Roboter 1, insbesondere einen kollaborativen Roboter.

Der Roboter 1 weist in der Figur ein erstes Armglied 3, ein zweites Armglied 4 und ein drittes Armglied 5 auf. Die Armglieder 3, 4, 5 sind vorteilhaft bezüglich einer oder mehrerer Achsen beweglich ausgebildet. Beispielsweise gelingt eine Relativbewegung des dritten Armglieds 5, auch Unterarm genannt, zum zweiten Armglied 4, auch Oberarm genannt, mittels eines Gelenks 2.

Das Gelenk 2 weist eine Struktur, auch Gelenkstruktur genannt, auf, welche als Joint 7 ausgebildet ist. Dies wird in FIG 2 näher erläutert.

Die Figur zeigt zudem ein Gelenk 21. Auch das Gelenk 21 kann den Joint 7 aufweisen.

Der Roboter 1 weist zudem ein Werkzeug 6 auf.

FIG 2 zeigt den Joint 7.

Der Joint 7 weist eine Mehrzahl an Komponenten auf. Zu diesen Komponenten zählen ein Antrieb 16 zur Bewegung des Gelenks 2 bzw. 21 und ein Geber 11 zur Bereitstellung einer Drehzahl-, Kommutierungs- und/oder Lageinformation. Der Antrieb 16 weist vorteilhaft einen Umrichter 15 sowie eine dynamoelektrische Maschine 14, insbesondere dynamoelektrische rotatorische Maschine, als Motor arbeitend, auf.

Die dynamoelektrische rotatorische Maschine 14 ist vorteilhaft als Servomotor ausgebildet. Sie eignet sich daher besonders gut zur Ermöglichung einer flüssigen und präzisen Relativbewegung zweier Armglieder zueinander. Eine optimale Bearbeitung von Werkstücken mittels des Werkzeugs 6 (siehe FIG 1) kann gewährleistet werden.

Ferner umfasst der Joint 7 vorteilhaft ein Getriebe 12. Die Figur zeigt zudem eine Bremse 13. Die genannten Komponenten sind bezüglich einer Achse A aneinandergereiht angeordnet.

FIG 3 zeigt einen Joint, der nicht Teil der Erfindung ist, aufweisend wenigstens ein Wärmerohr 9, 91.

In der Figur sind zwei Wärmerohre 9, 91 abgebildet. Eine derartige Ausführung weist eine besonders hohe Effizienz auf.

Das Wärmerohr 9, 91 ist vorzugsweise als Heatpipe ausgebildet.

Der Joint 7 weist ferner wenigstens einen externen Kühlkörper 8, 81 auf. Dieser ist vorteilhaft an einem vorderen oder axialen hinteren Ende des Joints 7 angeordnet.

In der Figur ist je ein externer Kühlkörper 8, 81 am vorderen axialen Ende und am hinteren axialen Ende des Joints 7 angeordnet. Das Wärmerohr 9,91 ist zur Abführung von Wärme aus dem Gelenk 2, 21, insbesondere aus dem Joint 7, ausgebildet.

Das Wärmerohr 9, 91 ist ferner derart ausgebildet, dass die aufgenommene Wärme an wenigstens einen externen Kühlkörper, vorzugsweise an beide externe Kühlkörper 8, 81, abgegeben werden kann.

Vorzugsweise ist das Wärmerohr 9, 91 zur Aufnahme der Wärme, wenigstens einer Komponente, vorzugsweise einer Mehrzahl an Komponenten tangierend ausgebildet.

Die beiden Wärmerohre 9 und 91 sind vorteilhaft an wenigstens im Wesentlichen gegenüberliegenden Seiten des Joints 7 angeordnet. Dies gewährleistet eine optimale Abfuhr von Wärme. Das Wärmerohr 9, 91 kann an den Randbereichen der Komponenten angeordnet sein. Ferner kann das Wärmerohr 9, 91 auch die Komponenten durchdringen.

Es ist ferner denkbar, dass das Wärmerohr 9, 91 mittig angeordnet ist.

FIG 4 zeigt eine Ausführung des Joints 7 gemäß der Erfindung.

In der Figur sind zwei Wärmerohre 10a, 10b abgebildet. In der Figur sind zudem zwei Wärmerohre 101a, 101b abgebildet.

Ein erstes Wärmerohr 10a tangiert eine erste Teilmenge der Komponenten. Ein zweites Wärmerohr 10b tangiert eine zweite Teilmenge der Komponenten. Die erste Teilmenge und die zweite Teilmenge sind unterschiedliche Teilmengen.

Auf diese Weise wird die Wärme in Richtung der externen Kühlkörper 8, 81 abgeführt.

Ein drittes Wärmerohr 101a tangiert die erste Teilmenge der Komponenten. Ein viertes Wärmerohr 101b tangiert die zweite Teilmenge der Komponenten. Auf diese Weise wird die Wärme ebenfalls in Richtung der externen Kühlkörper 8, 81 abgeführt.

Diese Ausführung ist vorteilhaft, da nur Komponenten, welche einer unbedingten Kühlung bzw. Wärmeabfuhr bedürfen, mit einem Wärmerohr verbunden sind.

Der Joint 7 weist vorteilhaft einen wenigstens im Wesentlichen kreisförmigen Querschnitt auf.

Vorteilhaft sind mehrere Wärmerohre 10a, 10b, 101a, 101b gleichmäßig über einen Umfang des Joints 7 verteilt angeordnet.

Die Erfindung eignet sich besonders gut zur Anwendung in Gelenken von kollaborierenden bzw. kollaborativen Robotern. Derartige Roboter 1 sind besonders gut für eine Zusammenarbeit mit Personen geeignet.

## Patentansprüche

1. Gelenk (2, 21) für einen Roboter (1), insbesondere kollaborativen Roboter, aufweisend eine Mehrzahl an Komponenten, wenigstens:
- einen Antrieb (16) zur Bewegung des Gelenks (2, 21),
- einen Geber (11) zur Bereitstellung einer Drehzahl-, Kommutierungs- und/oder Lageinformation,
- ein Wärmerohr (9, 91, 10a, 10b, 101a, 101b) zur Abführung von Wärme aus dem Gelenk (2, 21),
wobei das Gelenk (2, 21) eine Mehrzahl an Wärmerohren (9, 91, 10a, 10b, 101a, 101b) aufweist, wobei ein erstes Wärmerohr (10a, 101a) eine erste Teilmenge der Komponenten tangiert, wobei ein zweites Wärmerohr (10b, 101b) eine zweite Teilmenge der Komponenten tangiert, wobei die erste Teilmenge und die zweite Teilmenge unterschiedliche Teilmengen sind.

2. Gelenk (2, 21) nach Anspruch 1, wobei der Antrieb eine dynamoelektrische Maschine (14) und einen Umrichter (15) aufweist.

3. Gelenk (2, 21) nach einem der vorhergehenden Ansprüche, wobei das Gelenk (2, 21) als weitere Komponente ein Getriebe (12) aufweist.

4. Gelenk (2, 21) nach einem der vorhergehenden Ansprüche, wobei das Gelenk (2, 21) als weitere Komponente eine Bremse (13) aufweist.

5. Gelenk (2, 21) nach einem der vorhergehenden Ansprüche, aufweisend wenigstens einen externen Kühlkörper (8, 81).

6. Gelenk (2, 21) nach einem der vorhergehenden Ansprüche, wobei das Wärmerohr (9, 91, 10a, 10b, 101a, 101b) zur Abgabe der Wärme an einen externen Kühlkörper (8, 81) ausgebildet ist.

7. Gelenk (2, 21) nach einem der vorhergehenden Ansprüche, wobei das Wärmerohr (9, 91, 10a, 10b, 101a, 101b) als Heat-pipe ausgebildet ist.

8. Gelenk (2, 21) nach einem der vorhergehenden Ansprüche, wobei die Komponenten axial aneinandergereiht angeordnet sind.

9. Gelenk (2, 21) nach einem der vorhergehenden Ansprüche, wobei das Gelenk (2, 21) zwei externe Kühlkörper (8, 81) aufweist, wobei ein erster externer Kühlkörper (8) an einem vorderen axialen Ende des Gelenks (2, 21) angeordnet ist, wobei ein zweiter externer Kühlkörper (81) an einem hinteren axialen Ende des Gelenks (2, 21) angeordnet ist.

10. Roboter (1), insbesondere kollaborativer Roboter, aufweisend ein Gelenk (2, 21) nach einem der Ansprüche 1 bis 9

## Claims

1. Articulation (2, 21) for a robot (1), in particular a collaborative robot, having a plurality of components, at least:
- a drive (16) for moving the articulation (2, 21),
- a transducer (11) for providing information relating to a rotational speed, commutation and/or position, and
- a heat exchanger tube (9, 91, 10a, 10b, 101a, 101b) for removing heat from the articulation (2, 21),
wherein the articulation (2, 21) has a plurality of heat exchanger tubes (9, 91, 10a, 10b, 101a, 101b), wherein a first heat exchanger tube (10a, 101a) touches a first subset of the components, and wherein a second heat exchanger tube (10b, 101b) touches a second subset of the components, wherein the first subset and the second subset are different subsets.

2. Articulation (2, 21) according to claim 1, wherein the drive has a dynamo-electric machine (14) and a converter (15).

3. Articulation (2, 21) according to one of the preceding claims, wherein the articulation (2, 21) has a gear (12) as a further component.

4. Articulation (2, 21) according to one of the preceding claims, wherein the articulation (2, 21) has a brake (13) as a further component.

5. Articulation (2, 21) according to one of the preceding claims, having at least one external heat sink (8, 81).

6. Articulation (2, 21) according to one of the preceding claims, wherein the heat exchanger tube (9, 91, 10a, 10b, 101a, 101b) is designed to release the heat into an external heat sink (8, 81).

7. Articulation (2, 21) according to one of the preceding claims, wherein the heat exchanger tube (9, 91, 10a, 10b, 101a, 101b) is designed as a heat pipe.

8. Articulation (2, 21) according to one of the preceding claims, wherein the components are arranged consecutively in an axial direction.

9. Articulation (2, 21) according to one of the preceding claims, wherein the articulation (2, 21) has two external heat sinks (8, 81), wherein a first external heat sink (8) is arranged at a front axial end of the articulation (2, 21), and wherein a second external heat sink (81) is arranged at a rear axial end of the articulation (2, 21).

10. Robot (1), in particular a collaborative robot, having an articulation (2, 21) according to one of claims 1 to 9.

## Revendications

1. Articulation (2, 21) pour un robot (1), notamment un robot collaboratif, comportant une pluralité de constituants, au moins :
- un entraînement (16) pour le mouvement de l'articulation (2, 21),
- un capteur (11) pour disposer d'une information de vitesse de rotation, de commutation et/ou ou de position,
- un caloduc (9, 91, 10a, 10b, 101a, 101b) d'évacuation de la chaleur de l'articulation (2, 21),
dans laquelle l'articulation (2, 21) a une pluralité de caloducs (9, 91, 10a, 10b, 101a, 101b), dans laquelle un premier caloduc (10a, 101a) est tangent à un premier ensemble partiel des constituants, dans laquelle un deuxième caloduc (10b, 101b) est tangent à un deuxième ensemble partiel des constituants, dans laquelle le premier ensemble partiel et le deuxième ensemble partiel sont des ensembles partiels différents.

2. Articulation (2, 21) suivant la revendication 1, dans laquelle l'entraînement comporte une machine (14) dynamoélectrique et un onduleur (15).

3. Articulation (2, 21) suivant l'une des revendications précédentes, dans laquelle l'articulation (2, 21) a, comme autre constituant, une transmission (12).

4. Articulation (2, 21) suivant l'une des revendications précédentes, dans laquelle l'articulation (2, 21) a, comme autre constituant, un frein (13).

5. Articulation (2, 21) suivant l'une des revendications précédentes, comportant au moins un refroidisseur (8, 81) extérieur.

6. Articulation (2, 21) suivant l'une des revendications précédentes, dans laquelle le caloduc (9, 91, 10a, 10b, 101a, 101b) est constitué pour céder de la chaleur à un refroidisseur (8, 81) extérieur.

7. Articulation (2, 21) suivant l'une des revendications précédentes, dans laquelle le caloduc (9, 91, 10a, 10b, 101a, 101b) est constitué en heat-pipe.

8. Articulation (2, 21) suivant l'une des revendications précédentes, dans laquelle les constituants sont rangés axialement les uns à côté des autres.

9. Articulation (2, 21) suivant l'une des revendications précédentes, dans laquelle l'articulation (2, 21) a deux refroidisseurs (8, 81) extérieurs, dans laquelle un premier refroidisseur (8) extérieur est disposé à une extrémité axiale la plus en avant de l'articulation (2, 21), dans laquelle un deuxième refroidisseur (81) extérieur est disposé à une extrémité axiale la plus en arrière de l'articulation (2, 21).

10. Robot (1), notamment robot collaboratif, ayant une articulation (2, 21) suivant l'une des revendications 1 à 9.
